# EUROPÄISCHE PATENTSCHRIFT

(11) **EP 2 470 873 B1**
(45) Veröffentlichungstag und Bekanntmachung des Hinweises auf die Patenterteilung: **02.04.2014**
(21) Anmeldenummer: 10737780.6
(22) Anmeldetag: 22.07.2010
(51) Int. Cl.: G01L 3/16, G01M 13/02, G01M 15/00

(54) **PRÜFSTAND MIT SCHWINGUNGSTILGER**
TEST STAND HAVING A VIBRATION DAMPER
BANC D'ESSAI À AMORTISSEUR D'OSCILLATIONS

(30) Priorität: 26.08.2009 DE 102009038849
(43) Veröffentlichungstag der Anmeldung: 04.07.2012
(73) Patentinhaber: HORIBA Europe GmbH, 64293 Darmstadt (DE)
(72) Erfinder: LEE, Joon-Kyu, 83225 Langen (DE)
(74) Vertreter: Müller - Hoffmann & Partner
(86) Internationale Anmeldenummer: PCT/EP2010/004510
(87) Internationale Veröffentlichungsnummer: WO 2011/023271

(56) Entgegenhaltungen:
- WO-A1-93/03342
- DE-A1- 3 910 454
- JP-A- 58 146 745
- US-A- 5 829 320
- US-B1- 6 439 037

## Beschreibung

Die Erfindung betrifft einen Rotations-Prüfstand für einen Prüfling.

Derartige Prüfstände werden insbesondere zum Prüfen von Fahrzeugen und Fahrzeugkomponenten, wie z.B. Verbrennungsmotoren, Antriebssträngen und Bremsen eingesetzt. Dabei wird der Prüfling mit einer Lasteinrichtung gekoppelt und die zwischen Prüfling und Lasteinrichtung wirkende Last überwacht. Zum Prüfen eines Verbrennungsmotors wirkt die Lasteinrichtung als Bremse und kann z.B. durch ein Dynamometer, eine Hydraulikbremse oder eine Wirbelstrombremse realisiert werden. Zum Prüfen einer Bremse muss die Lasteinrichtung als Antriebseinrichtung ausgeführt sein und kann z.B. durch ein Dynamometer (z.B. ein Gleichstrommotor) realisiert werden. Die Lasteinrichtung, der Prüfling und die Messeinrichtung sind durch geeignete Komponenten, wie z.B. Gelenkwellen, Kupplungen und Hebel miteinander gekoppelt, um die wirkenden Drehmomente und Kräfte zuverlässig übertragen zu können.

Als Messeinrichtung sind verschiedene Lösungen bekannt. So ist es möglich, z.B. einen Drehmoment-Messflansch in den Verbindungsstrang zwischen Lasteinrichtung und Prüfling einzubauen. Ebenso ist es bekannt, z.B. die Lasteinrichtung oder auch den Prüfling pendelnd zu lagern und die im Betrieb resultierenden Momente über einen Hebel abzustützen, der gegen eine Kraftmesseinrichtung wirkt.

Das Prüfen des Prüflings erfordert in aller Regel einen Betrieb mit unterschiedlichen Drehgeschwindigkeiten und Drehmomenten, um einen realen Betrieb zwischen Leerlauf und Volllast nachbilden zu können.

Die verschiedenen Komponenten eines Prüfstands stellen - mechanisch abstrahiert - jeweils Feder-Masse-Systeme dar. Gerade bei größeren Prüfständen weisen die Komponenten daher verhältnismäßig niedrige Eigenfrequenzen auf. Dies betrifft insbesondere auch Torsionsschwingungen.

Die Prüflinge wie auch die Lasteinrichtung erzeugen Drehschwingungen und lineare Schwingungen, die in den Prüfstand eingeleitet und über die Komponenten des Prüfstands übertragen werden. Da die Prüflinge in einem breiten Drehzahlbereich betrieben werden können, lässt es sich nicht verhindern, dass die von den Prüflingen erzeugten Schwingungen mit Resonanzfrequenzen von anderen Komponenten des Prüfstands zusammenfallen. Das Anregen einer Komponente mit einer Frequenz im Eigenfrequenz- bzw. Resonanzbereich führt zu einer übermäßig starken Schwingungsbelastung der betreffenden Komponente und der benachbarten Aggregate, wodurch Teile des Prüfstands beschädigt, mindestens jedoch die Messergebnisse verfälscht werden können.

Wenn im Betrieb des Prüfstands Schwingungen entstehen, die mit Resonanzschwingungen von einer der Komponenten, insbesondere der Messeinrichtung, zusammenfallen, treten an der betreffenden Komponente starke Schwingungsüberhöhungen auf, die das Messergebnis verfälschen oder gar ein Messen der tatsächlichen Last unmöglich machen.

Aus der DE 39 10 454 A1 ist es bekannt, das Messsignal mit Hilfe einer elektronischen Schaltung zu korrigieren, um Schwingungseinflüsse in der Nähe von Resonanzfrequenzen zu eliminieren.

In der JP 58176531 wird eine Lösung beschrieben, bei der im Kraftfluss zwischen einem an einem pendelnd gelagerten Dynamometer befestigten Hebelarm und einer am Ende des Hebelarms angeschlossenen Kraftmesseinrichtung ein Federsatz eingebaut ist. Mit Hilfe des Federsatzes wird versucht, die Eigenfrequenz des Hebelarm-Kraftmess-Systems in einen unkritischen Bereich zu verschieben.

Maßnahmen zum Verschieben der Frequenzen in über- oder unterkritische Frequenzbereiche sind bei Prüfständen meist nicht hilfreich, weil die Prüflinge unter möglichst realen Bedingungen geprüft werden sollen. Auf diese Weise soll z.B. ein schwingungskritisches Verhalten eines Prüflings festgestellt werden. Ein Verschieben von Resonanzfrequenzen würde dies verhindern.

Auch das Dämpfen der Schwingungen mit Hilfe einer Gummi- bzw. Ausgleichskupplung im Antriebsstrang oder das Verringern der Erregung (Verändern des Prüflings selbst) ist in der Praxis nicht akzeptabel, da es die Übertragbarkeit der Prüfstandsergebnisse auf die reale Praxis in Frage stellt. Eine derartige Lösung ist z. B. aus der US 5,829,320 A bekannt.

Der Erfindung liegt die Aufgabe zugrunde, einen Prüfstand anzugeben, bei dem der störende Einfluss von Resonanzfrequenzen vermindert werden kann.

Die Aufgabe wird erfindungsgemäß durch einen Prüfstand mit den Merkmalen von Anspruch 1 gelöst. Vorteilhafte Ausgestaltungen sind in den abhängigen Ansprüchen angegeben.

Ein Rotations-Prüfstand für einen Prüfling weist eine Lasteinrichtung zum Erzeugen einer Last für den Prüfling auf sowie eine Prüflingsaufnahme zum Aufnehmen des Prüflings und zum Einleiten der Last auf den Prüfling, eine Messeinrichtung zum Messen einer auf den Prüfling wirkenden Messgröße, und eine Schwingungstilgereinrichtung zum Tilgen von Schwingungen, die in dem Prüfstand entstehen.

Der angegebene Prüfstand umfasst somit nicht den Prüfling selbst. Vielmehr kann der Prüfling vom Kunden bzw. Benutzer des Prüfstands nach Wunsch in die Prüfungsaufnahme eingesetzt und dort mit der von der Lasteinrichtung erzeugten Last gekoppelt werden. Die Systemgrenze des Prüfstands endet somit unmittelbar am Prüfling.

Die Prüflingsaufnahme kann daher insbesondere eine Lagerung für den Prüfling sowie Anschlusselemente zum Koppeln des Prüflings mit dem Prüfstand und zum Übertragen der Last von der Lasteinrichtung auf den Prüfling aufweisen. Die Systemgrenze des Prüfstands verläuft somit zwischen der Prüflingsaufnahme und dem vom Betreiber zur Verfügung zu stellenden Prüfling selbst.

Somit wird erfindungsgemäß ein klassischer Prüfstand angegeben, bei dem zusätzlich eine Schwingungstilgereinrichtung (nachfolgend auch als Schwingungstilger bezeichnet) vorgesehen ist. Ein Schwingungstilger (Engl.: tuned mass damper - TMD) ist ein ungedämpftes oder gedämpftes Feder-Masse-System mit einer Mechanik, die einen Zusatzschwinger bereitstellt, der die Amplitude eines bei einer Resonanzfrequenz schwingenden Systems deutlich reduzieren kann. Der Schwingungstilger wird mit dem zu beruhigenden System gekoppelt, indem er an geeigneter Stelle - sinnvollerweise an einer Stelle mit hoher Schwingungsamplitude - befestigt wird.

Das mechanische System des Schwingungstilgers weist dementsprechend eine Befestigungseinrichtung auf, die den restlichen Tilger trägt. Das System umfasst eine relativ zu der Befestigungseinrichtung bewegliche Masse (auch Masseneinrichtung mit z.B. mehreren Massen). Die Masse ist über eine Feder- und/oder Dämpfereinrichtung (nachfolgend auch kurz als Federeinrichtung bezeichnet) mit der Befestigungseinrichtung gekoppelt. Die Federeinrichtung kann z.B. ein E-lastomerelement (z.B. Gummi) mit entsprechender Steifigkeit und Dämpfung oder auch andere geeignete Werkstoffe, wie z.B. ein viskoses Fluid, aufweisen. Die Masse richtet sich nach der Masse des zu beruhigenden Systems und sollte im optimalen Fall bei etwa 5 bis 10 % der Systemmasse liegen, kann aber aus Gewichts- und Platzgründen auch niedriger sein. Bei der Auslegung des Schwingungstilgers müssen Frequenz, Masse und Dämpfung optimal aufeinander abgestimmt werden.

Somit kann der Schwingungstilger eine passive oder aktive Schwingungstilgungseinrichtung aufweisen bzw. ein ungedämpfter, ein gedämpfter oder ein viskoser Tilger sein.

Der Schwingungstilger ermöglicht es, dass Resonanzen im Bereich einer Eigenfrequenz eines zu beruhigenden Systems erheblich gedämpft oder gar völlig eliminiert werden können, je nach Abstimmung des Systems.

Der Schwingungstilger ist nicht im Kraftfluss zwischen den Komponenten des Prüfstands anzuordnen. Ohne weiteres kann er jedoch in unmittelbarer Nähe von Komponenten eingebaut werden, die im Kraftfluss liegen.

Insbesondere kann die Schwingungstilgereinrichtung an einem Ort angeordnet werden, ausgewählt aus der Gruppe: an einem Verbindungsstrang zwischen der Lasteinrichtung und der Prüflingsaufnahme, an einem Verbindungsstrang zwischen der Prüflingsaufnahme und der Messeinrichtung, an einem Verbindungsstrang zwischen der Lasteinrichtung und der Messeinrichtung, an der Lasteinrichtung selbst, an der Prüflingsaufnahme und/oder an der Messeinrichtung.

Je nach Problemlage kann daher ein Ort (oder auch mehrere Orte) festgelegt werden, an denen die Schwingungstilgereinrichtung vorteilhaft zu platzieren ist. Bei der Anordnung und Auslegung der Schwingungstilgereinrichtung ist jedoch darauf zu achten, dass möglichst keine Schwingungsamplituden eliminiert werden, die vom Prüfling selbst herrühren. Zweck des Prüfstands ist es in erster Linie, das Verhalten des Prüflings zu erfassen und analysieren. Daher sollten auch die Schwingungseigenschaften bzw. Torsionsschwingungen in der Antriebswelle des Prüflings (z.B. eines Verbrennungsmotors oder einer Bremse) erfasst, nicht jedoch eliminiert werden können.

Ohne weiteres können in dem Prüfstand mehrere Schwingungstilgereinrichtungen - auch mit unterschiedlichen Bauformen - vorgesehen sein, die an unterschiedlichen Orten am Prüfstand angeordnet sind. Auf diese Weise ist es möglich, störende Amplituden und Resonanzfrequenzen unschädlich zu machen.

Die Schwingungstilgereinrichtung kann ein linearer Schwingungstilger sein, wobei dann die Masseneinrichtung des Schwingungstilgers eine Masse aufweist, die linear hin und her bewegbar ist. Ein linearer Schwingungstilger ist sinnvollerweise an einer Komponente anzubringen, bei der im Resonanzfall überhöhte lineare Schwingungen zu erwarten sind.

Alternativ kann die Schwingungstilgereinrichtung ein torsionaler Schwingungstilger sein, bei dem die Masseneinrichtung eine Masse aufweist, die um eine Achse (die Hauptachse des Schwingungstilgers) drehend hin und her bewegbar ist. In diesem Fall kann die Masse z.B. kreisringförmig ausgebildet sein und durch eine im Inneren des Kreisrings befindliche Innenfeder mit der Befestigungseinrichtung gekoppelt werden. Ein torsionaler Schwingungstilger eignet sich zum Aufnehmen von Torsionsschwingungen, wie sie z.B. in einer Antriebswelle auftreten können.

Bei einer Variante des Prüfstands sind wenigstens ein linearer Schwingungstilger und wenigstens ein torsionaler Schwingungstilger vorgesehen. Auf diese Weise lassen sich Torsionsschwingungen im Antriebsstrang, insbesondere zwischen Lasteinrichtung und Prüfling, tilgen, während der lineare Schwingungstilger an einer zu der Messeinrichtung gehörenden Kraftmesseinrichtung vorgesehen sein kann.

Der Verbindungsstrang zwischen der Lasteinrichtung und der Prüflingsaufnahme und/oder der Verbindungsstrang zwischen der Prüflingsaufnahme und der Messeinrichtung und/oder der Verbindungsstrang zwischen der Lasteinrichtung und der Messeinrichtung kann eine drehbare Welle aufweisen. In diesem Fall kann die Schwingungstilgereinrichtung ein auf der Welle angeordneter torsionaler Schwingungstilger sein. Auch hier ist zu beachten, dass der Schwingungstilger nicht im Kraft- bzw. Drehmomentfluss der Welle eingesetzt ist, sondern zusätzlich auf die Welle aufgeschoben wird.

Alternativ ist es auch möglich, die Welle als Hohlwelle auszubilden und den Schwingungstilger im Inneren der Hohlwelle zu platzieren.

Bei einer Variante kann die Welle über den jeweiligen Verbindungsstrang hinaus nach wenigstens einer Seite axial überstehen und ein freies Ende bilden. Die Schwingungstilgereinrichtung kann dann auf dem freien Ende der Welle angeordnet sein. Dies hat Vorteile hinsichtlich des zur Verfügung stehenden Bauraums, weil der innere Bereich des Prüfstands, also der Bereich zwischen Lasteinrichtung und Prüfling nicht immer ohne weiteres zugänglich ist. Es genügt, wenn der Schwingungstilger, insbesondere ein torsionaler Schwingungstilger, auf das freie Ende der Welle aufgeschoben wird.

Die Messeinrichtung kann einen um eine Hauptachse des Prüfstands verschwenkbaren Hebelarm aufweisen, an dem eine Kraftmesseinrichtung angekoppelt ist. Dann kann die Schwingungstilgereinrichtung ein linearer Schwingungstilger sein und an den Hebelarm angeordnet werden.

Bei dem hier beschriebenen Messprinzip handelt es sich insbesondere um einen Fall, bei dem die Lasteinrichtung oder der Prüfling um seine Hauptachse pendelnd gelagert ist. Die Messeinrichtung weist den sich senkrecht zur Hauptachse erstreckenden Hebelarm auf, über den das am Prüfling oder an der Lasteinrichtung wirkende Drehmoment abgestützt wird. Am Ende des Hebelarms ist eine Kraftmessdose angekoppelt, die die sich durch das wirkende Drehmoment ergebende Kraft aufnimmt. Die Kraftmesseinrichtung kann insbesondere durch eine Kraftmessdose oder eine ähnliche bekannte Einrichtung gebildet werden.

Bei einer anderen Ausführungsform weist die Messeinrichtung einen um eine Hauptachse des Prüfstands verschwenkbaren ersten Hebelarm auf, an dem die Kraftmesseinrichtung angekoppelt ist. Gegenüber von dem ersten Hebelarm und mit diesem starr gekoppelt ist ein zweiter Hebelarm vorgesehen, wobei die Schwingungstilgereinrichtung in Form eines linearen Schwingungstilgers an dem zweiten Hebelarm angeordnet ist. Der erste und der zweite Hebelarm können insbesondere einstückig in Form eines Pendelbocks ausgebildet sein, der im Wesentlichen symmetrisch zu einer sich durch die Hauptachse erstreckenden vertikalen Mittelebene erstreckt.

Diese und weitere Vorteile und Merkmale der Erfindung werden nachfolgend anhand von Beispielen unter Zuhilfenahme der begleitenden Figuren näher erläutert. Es zeigen:
- **Fig. 1 bis 5**: schematisch verschiedene Prüfstandssysteme mit verschiedenen Beispielen für mögliche Anordnungen von Schwingungstilgern;
- **Fig. 6**: schematisch eine Messeinrichtung mit Schwingungstilger;
- **Fig. 7**: schematisch eine andere Ausführungsform einer Messeinrichtung;
- **Fig. 8**: eine Schnittdarstellung eines linearen Schwingungstilgers; und
- **Fig. 9**: eine Draufsicht und eine Schnittdarstellung eines torsionalen Schwingungstilgers.

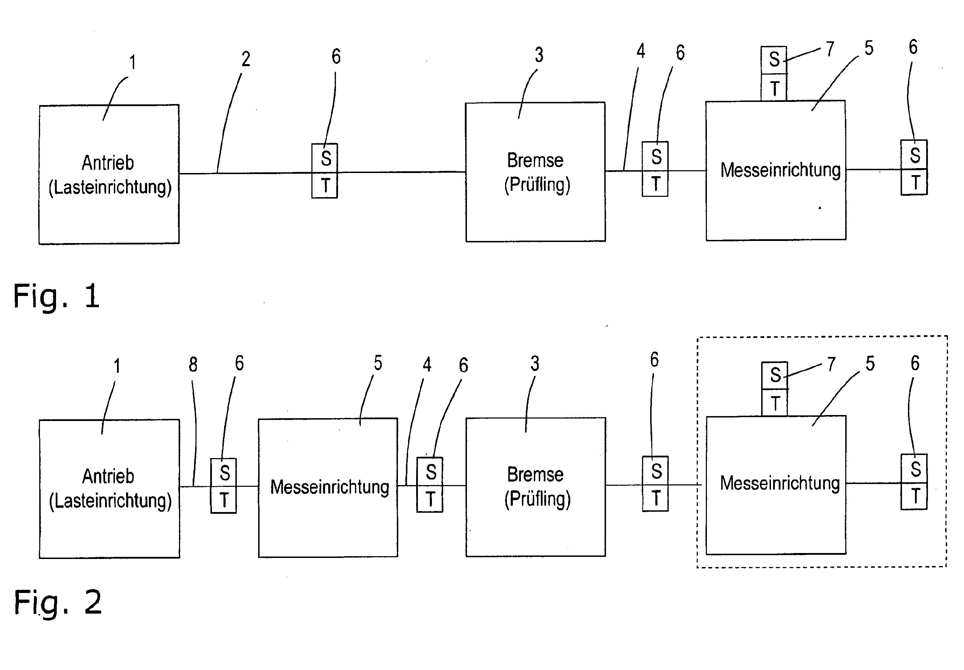

Die Fig. 1 bis 5 zeigen schematische Darstellungen von verschiedenen Beispielen für Prüfstände, bei denen die wesentlichen Komponenten unterschiedlich angeordnet sind. Die Prüfstände eignen sich für verschiedene Einsatzzwecke, wie sich jeweils aus den Darstellungen ergibt.

Fig. 1 zeigt einen Bremsen-Prüfstand mit einem als Lasteinrichtung dienenden Antrieb 1. der über einen Verbindungsstrang 2 eine als Prüfling dienende Bremse 3 belastet. Der Antrieb 1 kann z.B. durch ein Dynamometer, also z.B. durch einen Gleichstrommotor gebildet werden. Die Bremse 3 ist im eigentlichen Sinne nicht Bestandteil des Prüfstands. Sie ist vielmehr in einer nicht dargestellten Prüflingsaufnahme eingesetzt, die zur Lagerung bzw. Aufnahme der Bremse 3 dient und entsprechende Anschlusselemente zum Koppeln der Bremse 3 mit dem restlichen Prüfstand und zum Übertragen der Last vom Antrieb 1 auf die Bremse 3 bereitstellt.

Die Bremse 3 ist über einen Verbindungsstrang 4 mit einer Messeinrichtung 5 gekoppelt. Bei dem Verbindungsstrang 4 muss es sich nicht um eine Welle handeln. Vielmehr ist in Fig. 1 lediglich die Wirkverbindung in Form einer Linie als Verbindungsstrang 4 eingezeichnet. Ohne weiteres ist es auch möglich, dass der Verbindungsstrang 4 starr ist und dass z.B. die Messeinrichtung 5 neben der Bremse 3 angeordnet ist und über eine Hebeleinrichtung mit der Bremse 3 verbunden ist. Die Messeinrichtung 5 wird dann im Regelfall eine Kraftmesseinrichtung, jedoch keinen Messflansch aufweisen.

Insoweit handelt es sich bei der in Fig. 1 gezeigten Anordnung um einen "klassischen" Bremsen-Prüfstand.

Zusätzlich sind aber in Fig. 1 verschiedene Möglichkeiten für die Anordnung von Schwingungstilgern 6, 7 eingezeichnet. So ist es möglich, torsionale Schwingungstilger 6 in den Verbindungsstrang 2 zwischen dem Antrieb 1 und der Bremse 3, an den Verbindungsstrang 4 zwischen der Bremse 3 und der Messeinrichtung 5 sowie an dem überstehenden Ende des Verbindungsstrangs 4 vorzusehen. Beispielhaft ist auch ein linearer Schwingungstilger 7 an der Messeinrichtung 5 angeordnet.

Die Wirkungsweise der Schwingungstilger 6, 7 wird später noch an konkreten Beispielen erläutert.

Die Messeinrichtung 5 kann insbesondere durch einen Hebelarm und eine am Ende des Hebelarms vorgesehene Kraftmesseinrichtung (z.B. eine Kraftmessdose) gebildet werden. Mit Hilfe des Hebelarms kann das an der pendelnd gelagerten Bremse 3 abzustützende Bremsmoment abgegriffen und als Kraft auf der Kraftmessdose abgestützt werden.

Fig. 2 zeigt eine andere Ausführungsform für einen Bremsen-Prüfstand.

Dabei ist die Messeinrichtung 5 zwischen dem Antrieb 1 und der Bremse 3 angeordnet. In diesem Fall kann die Messeinrichtung 5 z.B. durch einen Drehmomentmessflansch gebildet werden.

Schwingungstilger 6, 7 können z.B. an einem Verbindungsstrang 8 zwischen dem Antrieb 1 und der Messeinrichtung 5, an dem Verbindungsstrang 4 zwischen der Messeinrichtung 5 und der Bremse 3, am freien Ende des Verbindungsstrangs 4 sowie an der Messeinrichtung 5 vorgesehen sein, wie im Einzelnen in der Fig. 2 gezeigt.

Der in Fig. 2 in einem gestrichelten Rahmen dargestellte Teil des Prüfstands ist optional vorhanden. So kann der Prüfstand ohne Weiteres auch nur in Form der in Fig. 2 links von dem gestrichelten Rahmen dargestellten Komponenten aufgebaut sein. Die Komponenten in dem Rahmen entsprechen dem Aufbau eines Teils des Prüfstands von Fig. 1. Der vollständige Prüfstand, einschließlich der Komponenten in dem gestrichelten Rahmen ermöglicht eine Leistungsmessung, bei der alternativ mit einem Messflansch (in Fig. 2 die linke Messeinrichtung 5; dort ist die Anbringung eines Schwingungstilgers nicht sinnvoll) oder mit einem Pendelbock (Hebel-Kraftmessdosenkombination; in Fig. 2 die rechte Messeinrichtung 5) gemessen werden kann.

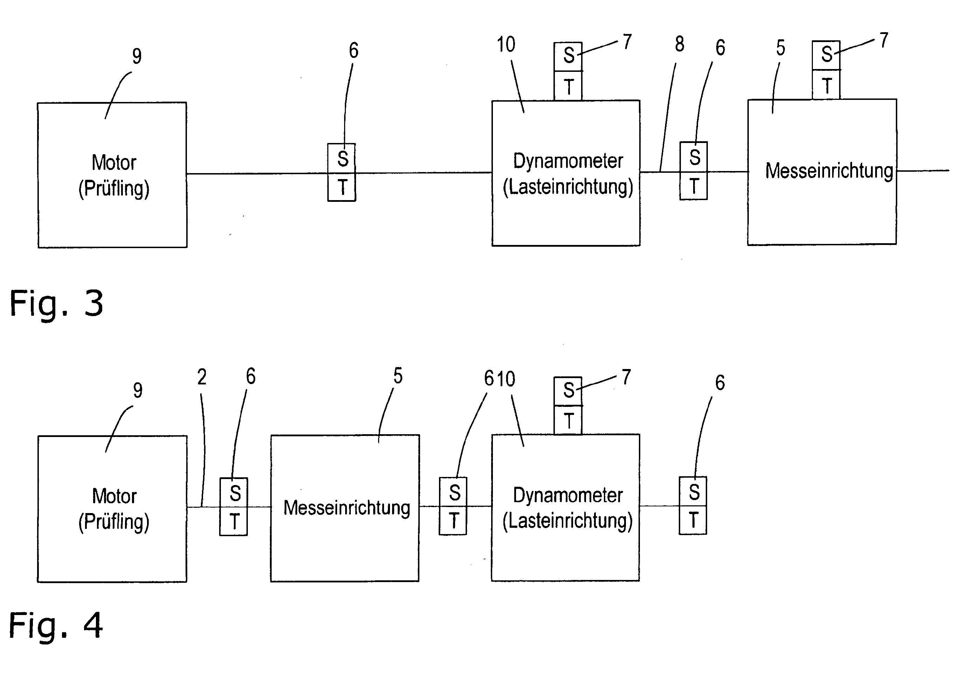

Fig. 3 zeigt einen Motoren-Prüfstand, der einen in einer nicht dargestellten Prüflingsaufnahme gelagerten, als Prüfling dienenden Motor 9, ein als Lasteinrichtung dienendes Dynamometer 10 und die Messeinrichtung 5 aufweist. Auch hier sind Schwingungstilger 6, 7 in geeigneter Weise anordenbar.

Fig. 4 zeigt einen anderen Motoren-Prüfstand, bei dem die Messeinrichtung 5-z.B. ein Drehmomentmessflansch - zwischen dem Motor 9 und dem Dynamometer 10 angeordnet ist.

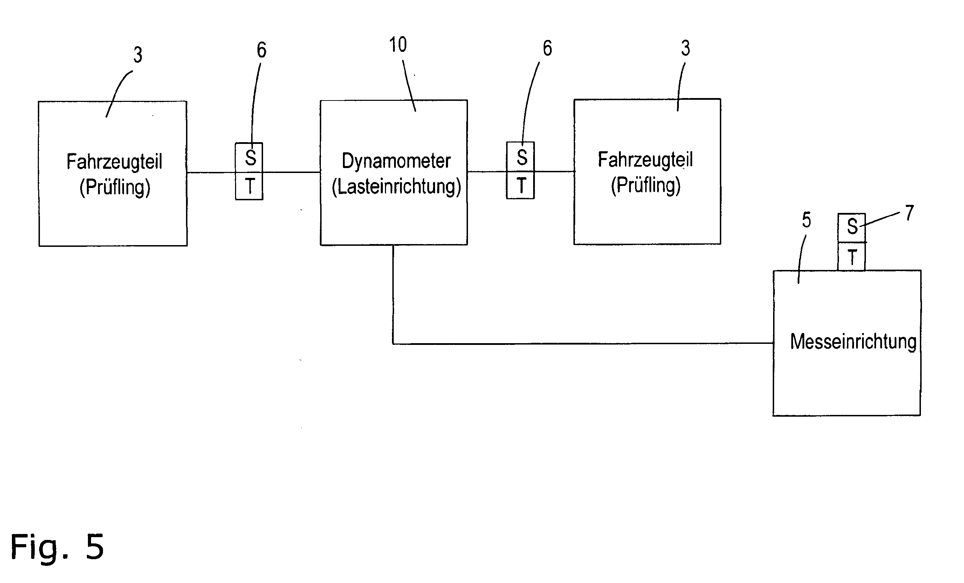

In Fig. 5 schließlich ist als weitere Ausführungsform ein Rollenprüfstand schematisch dargestellt. Die beiden als "Fahrzeugteil (Prüfling)" 3 bezeichneten Kästchen symbolisieren dabei z.B. die Prüfstands-Rollen, die mit den Rädern eines zu prüfenden Kraftfahrzeugs abwälzen. Das üblicherweise zwischen den beiden Prüfstands-Rollen angeordnete Dynamometer 10 dient dann als Lasteinrichtung. An dem Dynamometer 10 ist über einen Pendelarm die Messeinrichtung 5, z.B. eine Kraftmessdose gekoppelt, um das auf das Dynamometer 10 einwirkende Drehmoment zu bestimmen.

Auf den Drehachsen zwischen den Rollen (Bezugszeigen 3) und dem Dynamometer 10 sind jeweils torsionale Schwingungstilger 6 aufgesteckt, während ein linearer Schwingungstilger an dem Pendelarm der Messeinrichtung 5 vorgesehen ist.

Bei den beschriebenen Varianten können torsionale Schwingungstilger 6 oder lineare Schwingungstilger 7 an geeigneten Stellen angeordnet werden. Für alle Varianten gilt, dass als Schwingungstilger jeweils in Abhängigkeit von den vorherrschenden Schwingungen ein geeigneter torsionaler Schwingungstilger 6 und/oder ein linearer Schwingungstilger 7 vorzusehen ist. So wird der torsionale Schwingungstilger 6 vorwiegend bei rotierenden Bauelementen, also an Wellen oder Wellenenden sinnvoll sein, während der lineare Schwingungstilger 7 zum Aufnehmen von Schwingungen an linear schwingenden Bauelementen, z.B. an Gehäusen oder Pendelarmen, geeignet ist.

In den Fig. 1 bis 5 sind jeweils mehrere Schwingungstilger 6, 7 eingezeichnet. Ohne weiteres ist es auch möglich, nur einen Schwingungstilger 6, 7 in einem Prüfstand anzuordnen, um kritische Amplituden an besonders belasteten oder problematischen Stellen zu eliminieren.

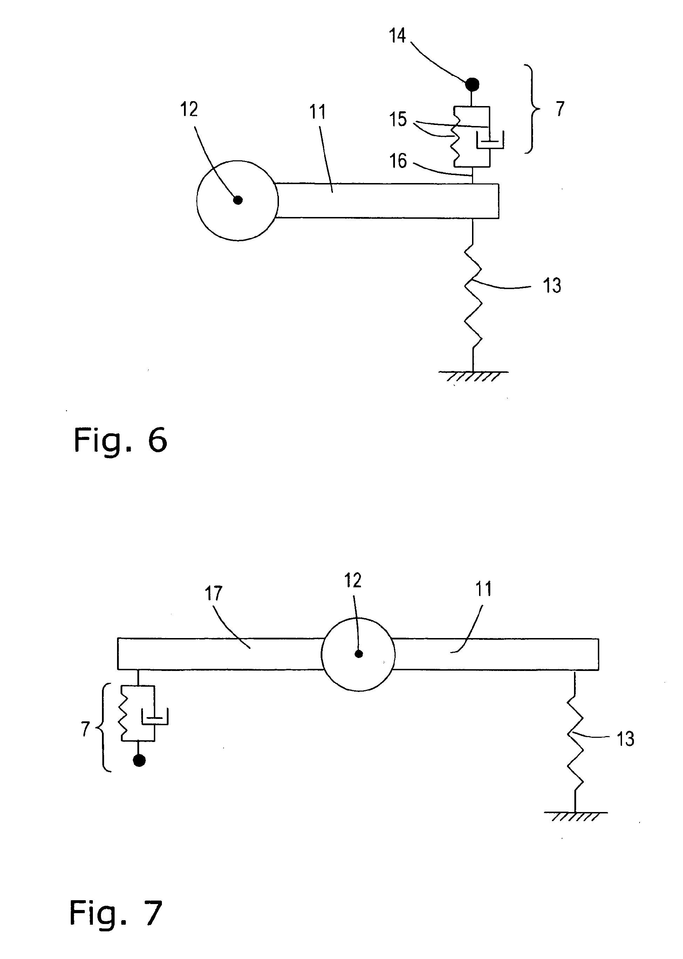

Fig. 6 zeigt ein schematisches Beispiel für die Messeinrichtung 5.

Dabei ist ein Hebel 11 (Hebelarm) um eine Hauptachse 12 verschwenkbar. Der Hebel 11 kann z.B. an der Außenseite eines Dynamometers oder mit einem Bremssattel der Bremse 3 gekoppelt werden, so dass ein Drehmoment auf ihn übertragen wird.

Am Ende des Hebels 11 ist an dessen Unterseite eine Kraftmesseinrichtung 13, z.B. in Form einer Kraftmessdose angeordnet. Die Kraftmessdose weist Federeigenschaften auf und ist daher in Fig. 5 stilisiert als Feder eingezeichnet.

An der Oberseite des Hebels 11 ist darüber hinaus ein linearer Schwingungstilger 7 aufgesetzt. Der Schwingungstilger 7 besteht im Prinzip aus einer beweglich gehaltenen Masse 14, die über ein Feder-Dämpfersystem 15 mit einer Befestigungseinrichtung 16 gekoppelt ist. Die Befestigungseinrichtung 16 ist dann auf dem Hebel 11 befestigt, so dass die Masse 14 relativ zu dem Hebel 11 beweglich ist.

Der Schwingungstilger 7 eliminiert Schwingungsamplituden im Eigenfrequenzbereich der Messeinrichtung 5.

Die Fig. 7 zeigt schematisch ein Beispiel für eine Variante der Messeinrichtung 5.

In diesem Fall ist der in Fig. 6 gezeigte Hebelarm 11 ein erster Hebelarm, dem gegenüber von der Hauptachse 12 ein zweiter Hebelarm 17 gegenüberliegend angeordnet ist. Der erste Hebelarm 11 und der zweite Hebelarm 17 können zusammen einstückig ausgebildet sein und einen so genannten Pendelbock-Hebelarm bilden.

An der Unterseite des ersten Hebelarms 11 ist die Kraftmesseinrichtung 13 angeordnet, während der lineare Schwingungstilger 7 an dem gegenüberliegenden zweiten Hebelarm 17 platziert ist.

Selbstverständlich können die Kraftmesseinrichtung 13 und der lineare Schwingungstilger 7 auch oberhalb von den Hebelarmen 11, 17 angeordnet werden.

Der Pendelbock mit den Hebelarmen 11, 17 ist mit einer Aufnahme gekoppelt, an der ein Bremssattel der Bremse 3 befestigt ist. Beim Betätigen der Bremse 3 muss der Bremssattel ein Drehmoment aufnehmen, das über den Pendelbock auf die Kraftmesseinrichtung 13 übertragen wird.

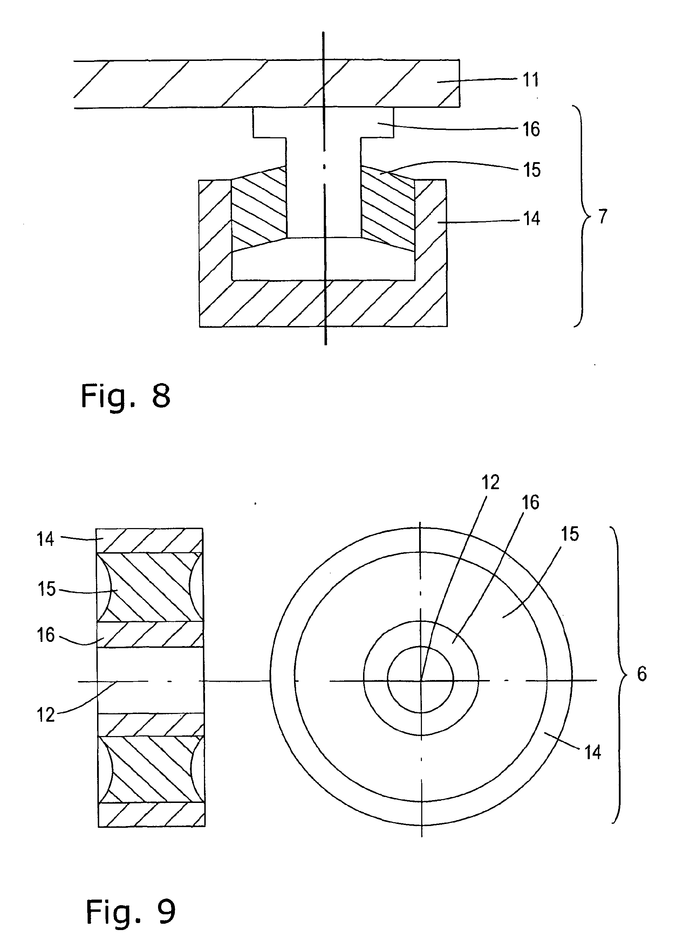

Fig. 8 zeigt schematisch den Aufbau eines linearen Schwingungstilgers 7.

Der Schwingungstilger 7 weist die Befestigungseinrichtung 16 auf, die über die Feder-Dämpfereinrichtung 15 die bewegliche Masse 14 trägt.

Die Feder-Dämpfereinrichtung 15 kann durch Elastomer, also z.B. Gummi oder ein anderes geeignetes Material gebildet werden. Die Masse 14 des Schwingungstilgers beträgt im Idealfall 5 bis 10 % der Masse des zu beruhigenden Systems. Aus Bauraum- oder Gewichtsgründen kann die Masse aber auch geringer sein.

Mit Hilfe der Befestigungseinrichtung 16, z.B. in Form einer Anschlussplatte, kann der Schwingungstilger 7 an dem Hebelarm 11 befestigt werden.

Fig. 9 zeigt in der Vorderansicht und in Schnittdarstellung einen torsionalen Schwingungstilger 6.

Der torsionale Schwingungstilger 6 ist meist kreissymmetrisch um die Hauptachse 12 angeordnet. Dabei kann die Befestigungseinrichtung 16 als Nabe ausgeführt und auf eine Antriebswelle bzw. auf einen entsprechenden Verbindungsstrang zwischen Komponenten des Prüfstands aufgeschoben werden. Die Befestigungseinrichtung 16 trägt über die Feder-Dämpfereinrichtung 15 die ringförmig ausgebildete Masse 14, die relativ zu der Befestigungseinrichtung 16 wenigstens in Drehrichtung relativ bewegbar ist.

## Patentansprüche

1. Rotations-Prüfstand für einen Prüfling (3, 9), mit
- einer Lasteinrichtung (1, 10) zum Erzeugen einer Last für den Prüfling (3, 9):
- einer Prüflingsaufnahme zum Aufnehmen des Prüflings (3, 9) und zum Einleiten der Last auf den Prüfling (3, 9);
- einer Messeinrichtung zum Messen einer auf den Prüfling (3. 9) wirkenden Messgröße; und mit
- einer Schwingungstilgereinrichtung (6, 7) zum Tilgen von Schwingungen, die in dem Prüfstand entstehen;
wobei
- die Schwingungstilgereinrichtung (6, 7) ein mechanisches System oder mehrere mechanische Systeme aufweist; **dadurch gekennzeichnet, dass**
- das mechanische System jeweils eine Befestigungseinrichtung (16), eine relativ zu der Befestigungseinrichtung (16) bewegliche Masseneinrichtung (14) und eine wirkungsmäßig zwischen der Befestigungseinrichtung (16) und der Masseneinrichtung (14) vorgesehene Feder- und/oder Dämpfereinrichtung (15) aufweist.

2. Prüfstand nach Anspruch 1, **dadurch gekennzeichnet, dass** die Schwingungstilgereinrichtüng (6, 7) an einem Ort angeordnet ist, ausgewählt aus der Gruppe
+ an einem Verbindungsstrang (2) zwischen der Lasteinrichtung (1) und der Prüflingsaufnahme.
+ an einem Verbindungsstrang (4) zwischen der Prüflingsaufnahme und der Messeinrichtung (5),
+ an einem Verbindungsstrang (8) zwischen der Lasteinrichtung (1, 10) und der Messeinrichtung (5),
+ an der Lasteinrichtung (1, 10),
+ an der Prüflingsaufnahme,
+ an der Messeinrichtung (5).

3. Prüfstand nach Anspruch 1 oder 2, **dadurch gekennzeichnet, dass** mehrere Schwingungstilgereinrichtungen (6, 7) vorgesehen sind, die an unterschiedlichen Orten angeordnet sind.

4. Prüfstand nach einem der Ansprüche 1 bis 3, **dadurch gekennzeichnet, dass** die Prüflingsaufnahme eine Lagerung für den Prüfling (3, 9) sowie Anschlusselemente zum Koppeln des Prüflings (3) mit dem Prüfstand und zum Übertagen der Last von der Lasteinrichtung (1, 10) auf den Prüfling (3, 9) aufweist.

5. Prüfstand nach einem der Ansprüche 1 bis 4, **dadurch gekennzeichnet, dass**
- die Schwingungstilgereinrichtung ein linearer Schwingungstilger (7) ist und die Masseneinrichtung eine Masse (14) aufweist, die linear hin und her bewegbar ist; oder
dass
- die Schwingungstilgereinrichtung ein torsionaler Schwingungstilger (6) ist und die Masseneinrichtung eine Masse (14) aufweist, die um eine Achse (12) drehend hin und her bewegbar ist.

6. Prüfstand nach einem der Ansprüche 1 bis 5, **dadurch gekennzeichnet, dass** wenigstens ein linearer Schwingungstilger (7) und wenigstens ein torsionaler Schwingungstilger (6) vorgesehen sind.

7. Prüfstand nach einem der Ansprüche 1 bis6, **dadurch gekennzeichnet, dass**
- der Verbindungsstrang (2) zwischen der Lasteinrichtung (1, 10) und der Prüflingsaufnahme und/oder der Verbindungsstrang (4) zwischen der Prüflingsaufnahme und der Messeinrichtung (5) und/oder der Verbindungsstrang (8) zwischen der Lasteinrichtung (1, 10) und der Messeinrichtung (5) eine drehbare Welle aufweist; und dass
- die Schwingungstilgereinrichtung auf der Welle angeordnet ist und ein torsionaler Schwingungstilger (6) ist.

8. Prüfstand nach Anspruch 7, **dadurch gekennzeichnet, dass**
- die Welle über den Verbindungsstrang hinaus nach wenigstens einer Seite axial übersteht und ein freies Ende bildet; und dass
- die Schwingungstilgereinrichtung (6) auf dem freien Ende der Welle angeordnet ist.

9. Prüfstand nach einem der Ansprüche 1 bis 8, **dadurch gekennzeichnet, dass**
- die Messeinrichtung (5) einen um eine Hauptachse (12) des Prüfstands verschwenkbaren Hebelarm (11) aufweist, an dem eine Kraftmesseinrichtung (13) angekoppelt ist; und dass
- die Schwingungstilgereinrichtung an dem Hebelarm (11) angeordnet ist und ein linearer Schwingungstilger (7) ist.

10. Prüfstand nach einem der Ansprüche 1 bis 9, **dadurch gekennzeichnet, dass**
- die Messeinrichtung (5) einen um eine Hauptachse (12) des Prüfstands verschwenkbaren ersten Hebelarm (11) aufweist, an dem eine Kraftmesseinrichtung (13) angekoppelt ist;
- die Messeinrichtung einen gegenüber von dem ersten Hebelarm (11) angeordneten und mit dem ersten Hebelarm (11) starr gekoppelten zweiten Hebelarm (17) aufweist; und dass
- die Schwingungstilgereinrichtung an dem zweiten Hebelarm (17) angeordnet ist und ein linearer Schwingungstilger (7) ist.

## Claims

1. A rotation test stand for a test specimen (3, 9), comprising
- a load device (1, 10) for generating a load for the test specimen (3, 9);
- a test specimen accommodation for accommodating the test specimen (3, 9) and for transmitting the load to the test specimen (3, 9);
- a measuring device for measuring a measured variable acting on the test specimen (3, 9); and comprising
- a vibration damping device (6, 7) for damping vibrations, which arise in the test stand;
wherein
- the vibration damping device (6, 7) encompasses a mechanical system or a plurality of mechanical systems; **characterized in that**
- the mechanical system in each case encompasses a fastening device (16), a mass device (14), which can be moved relative to the fastening device (16), and a spring and/or damping device (15), which is provided in an operative manner between the fastening device (16) and the mass device (14).

2. The test stand according to claim 1, **characterized in that** the vibration damping device (6, 7) is arranged at a location, chosen from the group
+ at a connecting strand (2) between the load device (1) and the test specimen accommodation,
+ at a connecting strand (4) between the test specimen accommodation and the measuring device (5),
+ at a connecting strand (8) between the load device (1, 10) and the measuring device (5),
+ at the load device (1, 10),
+ at the test specimen accommodation,
+ at the measuring device (5).

3. The test stand according to claim 1 or 2, **characterized in that** provision is made for a plurality of vibration damping devices (6, 7), which are arranged at different locations.

4. The test stand according to any one of claims 1 to 3, **characterized in that** the test specimen accommodation encompasses a support for the test specimen (3, 9) as well as connecting elements for coupling the test specimen (3) to the test stand and for transmitting the load from the load device (1, 10) to the test specimen (3, 9).

5. The test stand according to any one of claims 1 to 4, **characterized in that**
- the vibration damping device is a linear vibration damper (7) and the mass device encompasses a mass (14), which can be moved back and forth linearly; or
that
- the vibration damping device is a torsional vibration damper (6) and the mass device encompasses a mass (14), which can be moved back and forth so as to rotate about an axis (12).

6. The test stand according to any one of claims 1 to 5, **characterized in that** provision is made for at least one linear vibration damper (7) and for at least one torsional vibration damper (6).

7. The test stand according to any one of claims 1 to 6, **characterized in that**
- the connecting strand (2) between the load device (1, 10) and the test specimen accommodation and/or the connecting strand (4) between the test specimen accommodation and the measuring device (5) and/or the connecting strand (8) between the load device (1, 10) and the measuring device (5) encompasses a rotatable shaft; and that
- the vibration damping device is arranged on the shaft and is a torsional vibration damper (6).

8. The test stand according to claim 7, **characterized in that**
- the shaft projects axially beyond the connecting strand at least towards one side and forms a free end; and that
- the vibration damping device (6) is arranged on the free end of the shaft.

9. The test stand according to any one of claims 1 to 8, **characterized in that**
- the measuring device (5) encompasses a lever arm (11), which can be pivoted about a main axis (12) of the test stand and to which a force-measuring device (13) is coupled; and that
- the vibration damping device is arranged on the lever arm (11) and is a linear vibration damper (7).

10. The test stand according to any one of claims 1 to 9, **characterized in that**
- the measuring device (5) encompasses a first lever arm (11), which can be pivoted about a main axis (12) of the test stand and to which a force-measuring device (13) is coupled;
- the measuring device encompasses a second lever arm (17), which is arranged opposite the first lever arm (11) and which is rigidly coupled to the first lever arm (11); and that
- the vibration damping device is arranged on the second lever arm (17) and is a linear vibration damper (7).

## Revendications

1. Banc d'essai rotatif pour échantillon d'essai (3, 9), avec
- un dispositif de contrainte (1, 10) pour produire une contrainte pour l'échantillon (3, 9) ;
- un logement pour échantillon pour recevoir l'échantillon (3, 9) et pour provoquer la contrainte sur l'échantillon (3, 9) ;
- un dispositif de mesure pour mesurer une grandeur de mesure qui agit sur l'échantillon (3, 9) ; et avec
- un dispositif amortisseur de vibrations (6, 7) pour amortir les vibrations qui apparaissent dans le banc d'essai ;
étant précisé que
- le dispositif amortisseur de vibrations (6, 7) comporte un système mécanique ou plusieurs systèmes mécaniques ;
**caractérisé en ce que**
- le système mécanique comporte un dispositif de fixation (16), un dispositif à masse (14) qui est mobile par rapport au dispositif de fixation (16), et un dispositif à ressort et/ou amortisseur (15) qui est prévu de manière fonctionnelle entre le dispositif de fixation (16) et le dispositif à masse (14).

2. Banc d'essai selon la revendication 1, **caractérisé en ce que** le dispositif amortisseur de vibrations (6, 7) est disposé à un endroit qui est choisi dans le groupe suivant :
+ sur une ligne de liaison (2) entre le dispositif de contrainte (1) et le logement pour échantillon d'essai,
+ sur une ligne de liaison (4) entre le logement d'échantillon d'essai et le dispositif de mesure (5),
+ sur une ligne de liaison (8) entre le dispositif de contrainte (1, 10) et le dispositif de mesure (5),
+ sur le dispositif de contrainte (1, 10),
+ sur le logement pour échantillon d'essai,
+ sur le dispositif de mesure (5).

3. Banc d'essai selon la revendication 1 ou 2, **caractérisé en ce qu'**il est prévu plusieurs dispositifs amortisseurs de vibrations (6, 7), qui sont disposés à différents endroits.

4. Banc d'essai selon l'une des revendications 1 à 3, **caractérisé en ce que** le logement pour échantillon d'essai comporte un support pour l'échantillon d'essai (3, 9) ainsi que des éléments de raccordement pour accoupler ledit échantillon (3) au banc d'essai et pour transmettre la contrainte du dispositif de contrainte (1, 10) à l'échantillon (3, 9).

5. Banc d'essai selon l'une des revendications 1 à 4, **caractérisé en ce que**
- le dispositif amortisseur de vibrations est un amortisseur de vibrations linéaire (7), et le dispositif à masse comporte une masse (14) qui est apte à décrire un mouvement de va-et-vient linéaire ; ou
**en ce que**
- le dispositif amortisseur de vibrations est un amortisseur de vibrations à torsion (6), et le dispositif à masse comporte une masse (14) qui est apte à décrire un mouvement de va-et-vient tournant sur un axe (12).

6. Banc d'essai selon l'une des revendications 1 à 5, **caractérisé en ce qu'**il est prévu au moins un amortisseur de vibrations linéaire (7) et au moins un amortisseur de vibrations à torsion (6).

7. Banc d'essai selon l'une des revendications 1 à 6, **caractérisé en ce que**
- la ligne de liaison (2) entre le dispositif de contrainte (1, 10) et le logement pour échantillon et/ou la ligne de liaison (4) entre le logement pour échantillon et le dispositif de mesure (5) et/ou la ligne de liaison (8) entre le dispositif de contrainte (1, 10) et le dispositif de mesure (5) comportent un arbre rotatif ; et **en ce que**
- le dispositif amortisseur de vibrations est disposé sur l'arbre et est constitué par un amortisseur de vibrations à torsion (6).

8. Banc d'essai selon la revendication 7, **caractérisé en ce que**
- l'arbre dépasse axialement de la ligne de liaison vers au moins un côté et forme une extrémité libre ; et **en ce que**
- le dispositif amortisseur de vibrations (6) est disposé sur l'extrémité libre de l'arbre.

9. Banc d'essai selon l'une des revendications 1 à 8, **caractérisé en ce que**
- le dispositif de mesure (5) comporte un bras de levier (11) qui est apte à pivoter sur un axe principal (12) du banc d'essai et auquel est accouplé un dispositif de mesure de force (13) ; et **en ce que**
- le dispositif amortisseur de vibrations est disposé sur le bras de levier (11) et est constitué par un amortisseur de vibrations linéaire (7).

10. Banc d'essai selon l'une des revendications 1 à 9, **caractérisé en ce que**
- le dispositif de mesure (5) comporte un premier bras de levier (11) qui est apte à pivoter sur un axe principal (12) du banc d'essai et auquel est accouplé un dispositif de mesure de force (13) ;
- le dispositif de mesure comporte un second bras de levier (17) qui est disposé à l'opposé du premier bras de levier (11) et qui est accouplé rigidement à celui-ci ; et **en ce que**
- le dispositif amortisseur de vibrations est disposé sur le second bras de levier (17) et est constitué par un amortisseur de vibrations linéaire (7).
